# EUROPEAN PATENT APPLICATION

(11) **EP 2 093 013 A2**
(43) Date of publication of application: **26.08.2009**
(21) Application number: 09151689.8
(22) Date of filing: 30.01.2009
(51) Int. Cl.: B23Q 1/01, B23Q 11/00

(54) **Structure for machine tool**

(30) Priority: 01.02.2008 IT MO20080033
(71) Applicant: SCM Group S.p.A., 47900 Rimini (IT)
(72) Inventor: Maioli, Fabio, 47822 Santarcangelo di Romagna (RN) (IT)
(74) Representative: Crugnola, Pietro

(57) **Abstract**

A machine tool for processing pieces of wood or similar materials comprises operating means (2) for machining said workpieces, portal means (3) for slidably supporting said operating means (2), a plurality of resting and retaining means (4t) for supporting said workpieces, and base means (5) extending longitudinally along a first horizontal (X) direction, suitable for supporting - slidably in said first direction (X) - both said resting and retaining means (4t)and said portal means (3), said base means (5) defining
- according to a normal section of said first direction (X)
- substantially a "V" shape with the concavity facing upwards, suitable for connecting chips, and having, at a first and at a second top end of said "V" shape, respectively a first (6a) and a second (6b) beam-shaped carrying element, extending in said first horizontal (X) direction, the whole of said first (6a) and second (6b) beam-shaped element configuring two substantially opposite sides of the upper top portion of said base means (5).

## Description

The invention relates to a particular architecture for numerically controlled machine tools for machining wood and similar materials, this architecture in particular relating to a base of these machines that is suitable for conferring, through a special shape thereof, greater compactness, better stiffness and greater accessibility by the operator to the machine.

With such a base a corresponding portal is associated that is movable on this base, the architecture of which is referable to a classic two-uprights pattern and a transverse longitudinal member, but which has constructional details that are specified below that are suitable for making the use thereof more advantageous.

Bases are known for machine tools for machining wood that, in order to fix the workpieces during machining, are provided with crosspieces that in turn have normal suction cups and/or clamps. In use, the aforesaid suction lying on a plane cups and/or clamps are arranged for maintaining the workpieces to be machined in a raised position with respect to an ideal machining plane and for immobilising the workpieces on command.

When the machine tool is used the aforesaid crosspieces are movable with respect to the base along a horizontal direction and are superimposed by a generally open portal that is slidable on the base owing to guides positioned behind the base with respect to an operating side.

The corresponding portal then has operating units that perform the various milling and/or boring and/or other tooling that are necessary on the workpieces fixed to the crosspieces.

These bases are obtained by assembling through welding large folded sheets but in a large number of cases the structural configuration that is obtained is not able to confer optimal stiffness on such bases as strong structural elements are generally missing from the latter that are obtained by making closed or semiclosed sections, sometimes commonly called box sections, in those parts where there would be need therefore. The performance of such bases in relation to the operating loads is thus generally the result of the collaboration of several elements thereof, many of which are made with a thin thickness, or an open section, and which thus *per* se have poor stiffness and thus locally, give rise to yielding that may also be significant if the movable loads are concentrated thereupon. Further, also the arrangement of the two linear guides of the portal on the rear part of the base, and the consequent need to resort to a portal of open type, confer rather low stiffness on the base and portal assembly, with the consequent occurrence of machining imperfections. These may also be due to the modes of vibrating that are inherent to such bases, which, for the aforesaid reasons, are excitable already by rather low forcing frequencies, which commonly occur on such machine tools, even in the presence of not too much extreme operating dynamics.

In other words, prior-art bases, which are intended for supporting open portals, have rather a strong part near the rear regions, with respect to the operating side, where the linear guides are applied that are intended for the sliding of the open portal, whilst they have rather a flexing construction towards the front, or operating side, that is intended only for supporting the front sliding guide of the crosspieces, which in practice is made almost always with relatively not very stiff structures, in consideration of the modest loads expected.

In such prior-art architecture operator accessibility is also often hardly satisfactory, on the aforesaid operator side, or front side, of the machine tool, towards the workpieces fixed on the plane of the crosspieces, as along the aforesaid front side also the overall dimensions of the feed sheaths of the electric and pneumatic cables must be considered that are necessary for handling of the crosspieces, even if said sheaths are often confined behind a suitable protective guard that, although it bestows order on the front side of the machine, cannot in any case reduce the overall physical dimensions of the sheaths. The architecture of prior-art bases of the aforesaid machine is not very compatible with efficient capture and elimination of the chips and machining dusts, inasmuch as in the design of the lower part of such bases the problem of the dust to be captured is often given scant consideration and consequently such bases have a multiplicity of lower openings and slits and a multiplicity of niches in which the dust collects and which it is then difficult to remove therefrom, with consequences both from the aesthetic point of view and from the point of view of the salubriousness of the microclimate surrounding the machine.

The aspects disclosed above constitute drawbacks of the prior-art architecture.

An object of the invention is to improve the structural stiffness of the bases of the type of machines disclosed above, introducing well-defined, strategically arranged strengthening elements such as beam-shaped elements with box sections, i.e. structures box-shaped with great stiffness.

A further object of the invention is to improve accessibility on a front side, or operating side, of the operator to the workpieces fixed to the crosspieces, providing a machine architecture that is such that the crosspieces may extend as far as possible towards the front side, without the limitations due, for example, to the overall dimensions of the sheaths on the front side.

A still further object of the invention is to define a base architecture that is very compatible with the basic principles of capturing and evacuating machining dusts and wastes, in particular by means of a correct design of the collecting surfaces in the lower part of the base. According to the invention a machine tool is provided for processing pieces of wood or similar materials, comprising operating means for machining said workpieces, portal means for slidably supporting said operating means, a plurality of resting and retaining means for supporting said workpieces, and base means extending longitudinally along a first horizontal direction, suitable for supporting - slidably in said first direction - both said resting and retaining means, and said portal means, characterised in that said base means defines - according to a normal section of said first direction - substantially a "V" shape with the concavity facing upwards, suitable for connecting wastes, and in that said base means has, at a first and a second top end of said "V" shape, respectively a first and a second load-bearing beam-shaped element, extending in said first horizontal direction, the whole of said first and second beam-shaped element configuring two substantially opposite sides of the upper top portion of said base means. Owing to the invention, and in particular to said first beam-shaped element and to said second beam-shaped element, it is possible to improve the structural stiffness of said base means.

Further, owing to said "V" shape of said base means it is possible to collect said wastes and convey said wastes to a lower portion of said base means in a more effective manner than known machine tools.

The invention can be better understood and implemented with reference to the attached drawings, which show an embodiment thereof by way of non-limiting example, in which:
Figure 1 is a perspective view of a machine tool for processing pieces of wood or similar materials;
Figure 2 is a further perspective view of the machine tool in Figure 1;
Figure 3 is a frontal view of the machine tool in Figure 1 with some details removed.

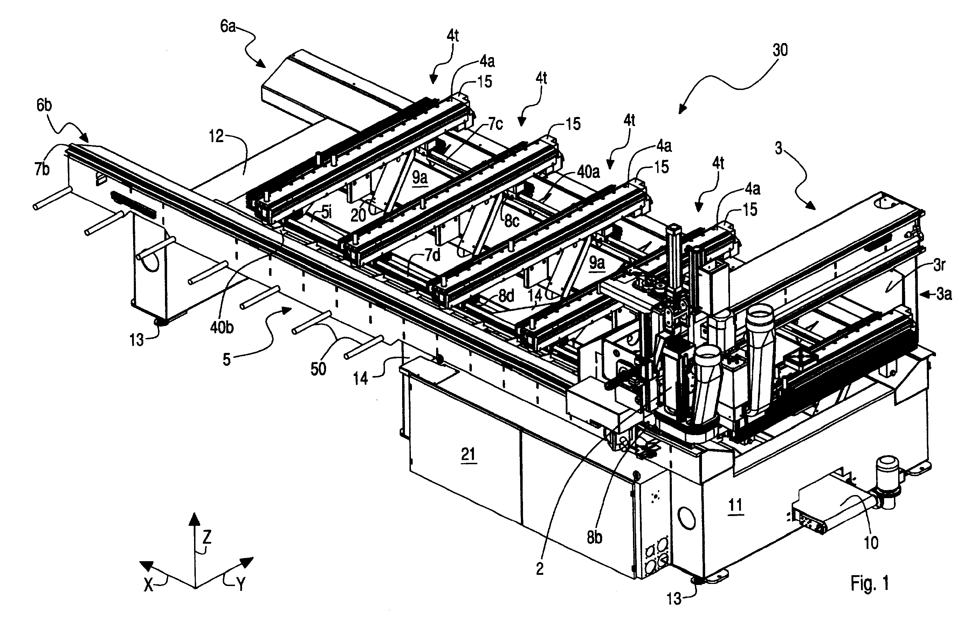

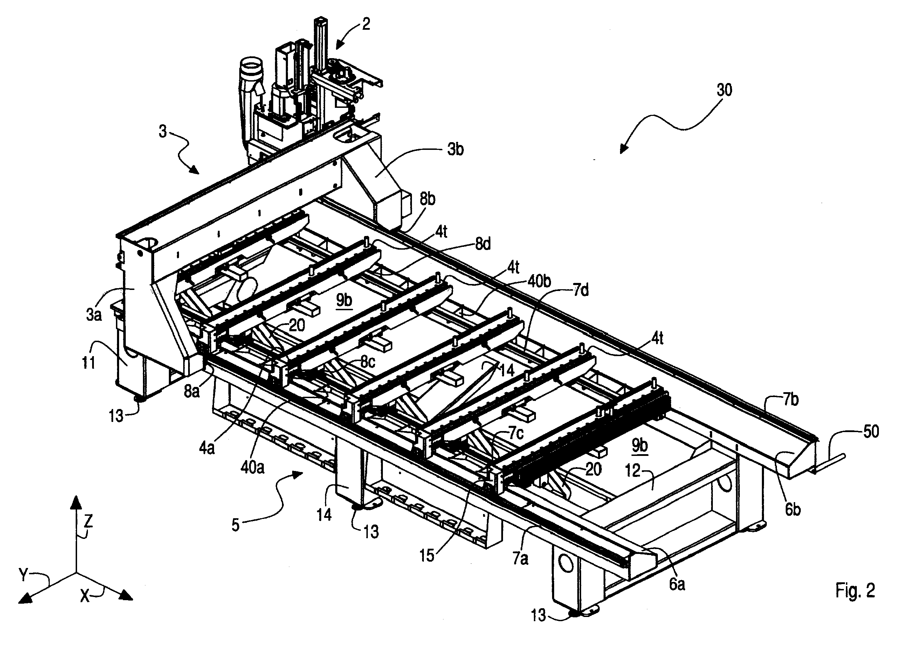

With reference to Figures 1 to 3, there is shown a machine tool 30 for machining workpieces, which are not shown, made of wood or similar materials.

The machine tool 30 is provided with operating means 2, for example comprising an electrospindle for machining the aforesaid workpieces, and with portal means 3 for slidably supporting the operating means 2.

In particular, the portal means 3 moves the operating means 2 substantially parallel to a first, substantially horizontal, direction X, to a second, direction Z substantially vertical and perpendicular to the first direction X, and to a third direction Y, which is substantially vertical and perpendicular to the first direction X and to the second direction Z.

The machine tool 30 is further provided with a plurality of resting and retaining means 4t, extending substantially parallel to the third direction Y, for supporting the aforesaid workpieces, and with base means 5 extending longitudinally substantially parallel to the first direction X.

In particular, the base means 5 is arranged for slidably supporting, parallel to the first direction X, both the resting and retaining means 4t and the portal means 3. Further, the base means 5 defines, according to a normal section of the first direction X, substantially a "V" shape, with the concavity facing upwards, suitable for collecting machining wastes.

The base means 5 further has, substantially at a first and a second upper end of the aforesaid "V" shape, respectively a first load-bearing beam-shaped element 6a and a second load-bearing beam-shaped element 6b, the first beam-shaped element 6a being situated at a lower level, along the second direction Z, with respect to a level of the second beam-shaped element 6b.

The first beam-shaped element 6a and second beam-shaped element 6b assembly configures two substantially opposite sides of the upper top portion of the base means 5.

The aforesaid "V" shape is defined, according to a normal section of the first axis X, by a first tilted surface 9a and by a second tilted surface 9b of the base means 5, these tilted surfaces 9a, 9b being substantially reducible to two or more flat folds, extending substantially parallel to the first direction X.

Further, the aforesaid tilted surfaces 9a, 9b converge on a lower part 5i of the base means 5, where a lower collecting system 10 is provided for collecting the aforesaid machining waste, in particular chips.

In particular, the aforesaid system comprises a belt conveyor 10 for evacuating, parallel to the first direction X, the chips falling from the resting and retaining means 4t or from the tilted surfaces 9a, 9b.

The aforesaid first 6a and/or second 6b beam-shaped element, have, according to a normal section of the first direction X, substantially a hollow section, possibly having slots and/or beads and/or stiffening ribs spaced along the first direction X.

In particular, the first 6a and/or second 6b beam-shaped element define, according to a normal section of the first direction X, substantially a trapezium shape the lesser base of which substantially faces the centre of the aforesaid "V" shape, an oblique side of the aforesaid trapezium shape facing upwards to configure an upper part of the aforesaid "V" shape.

In particular, the aforesaid trapezium shape substantially has the shape of a rectangular trapezium.

In an embodiment of the invention, which is not shown, the aforesaid first 6a and/or second 6b beam-shaped element define, according to a normal section of the first direction X, any shape.

With the first 6a, and with the second 6b beam-shaped element, there is respectively associated a first 7a, and a second 7b linear motion guide, this first 7a, and this second 7b linear motion guide extending substantially parallel to the first direction X.

In particular, on the first 7a, and on the second 7b linear motion guide first 8a and second 8b pad means are sliding respectively, which are associated with the portal means 3 to slide the latter with respect to the base means 5.

Also the first linear guide 7a is associated with the first beam-shaped element 6a on a surface thereof that is substantially an external border for the base means 5 and substantially lying on a plane defined by the first direction X and by the second direction Z.

On the other hand, the second linear guide 7b is associated with the second beam-shaped element 6b on a surface thereof that is substantially an external border to the base means 5 and substantially lying on a plane defined by the first direction X and by the third direction Y.

The machine tool 30 further comprises a third linear guide 7c and a fourth linear guide 7d associated respectively with the first beam-shaped element 6a and with the second beam-shaped element 6b.

In particular, the third linear guide 7c and the fourth linear guide 7d are fixed respectively on first appendages like stiffening ribs 40a of the first beam-shaped element 6a and on second appendages like stiffening ribs 40b of the second beam-shaped element 6b, the first appendages like stiffening ribs 40a and the second appendages like stiffening ribs 40b protruding respectively from the first beam-shaped element 6a and from the second beam-shaped element 6b.

On the third 7c, and on the fourth 7d linear motion guide, extending substantially parallel to the first direction X, third 8c and fourth 8d pad means are respectively slidable, associated with each of the aforesaid resting and retaining means 4t to enable each of the latter to slide with respect to the base means 5.

In particular, the third 7c and the fourth 7d linear guide are positioned, in a direct plan view substantially parallel to the second direction Z, inside a strip defined by the first 7a and second 7b linear guide, the third linear guide 7c and the fourth linear guide 7d being positioned respectively near the first linear guide 7a and the second linear guide 7b.

The aforesaid base means 5 further comprises two carrying heads 11, 12, substantially end carrying heads, each having foot means 13 for resting on a floor, which is not shown, of the base means 5.

In particular, on the carrying heads 11, 12, extending prevalently according to two respective planes that are normal in relation to the first direction X and are made with flat and/or folded, and/or welded sheets, configuring sections with a high resistance module, or also closed section, are fixed to respective substantially end parts of the first 6a and second 6b beam-shaped element.

The aforesaid base means 5 further comprises, in a position comprised between the two aforesaid carrying heads 11, 12, an intermediate strengthening carrying structure 14 having the aforesaid foot means 13 for resting the base means 5 on the floor.

In particular, on the carrying structure 14, extending prevalently according to a respective plane that is normal in relation to the first direction X and is made with flat and/or folded and/or welded sheets, configuring sections with a high resistance module, respective parts are fixed that are substantially intermediate parts of the first 6a and second 6b beam-shaped element.

Further, the carrying structure 14 and at least one of the aforesaid carrying heads 11, 12, have below a shape that is compatible with the traversing, parallel to the first direction X, of the belt conveyor 10 to evacuate the chips. In particular, the carrying structure 14 and at least one of the aforesaid carrying heads 11, 12 have an opening.

The aforesaid plurality of resting and retaining means comprises crossbeam means 4t, suitable for supporting suction cups or clamps for fixing aforesaid workpieces.

Such crossbeam means 4t extends substantially parallel to the third direction Y and engages slidably on the third 7c and fourth 7d linear guide respectively by means of the third 8c, and fourth 8d pad means, associated with the crossbeam means 4t, the crossbeam means 4t being placed above in the base means 5, substantially closing the aforesaid "V" shape.

This crossbeam means 4t has in the part nearest the first beam-shaped element 6a and intended for accessing the operator, substantially at a first end 4a thereof, a control and/or display panel 15 for driving the crossbeam means 4t. In particular, the crossbeam means 4t extends along the third direction Y so that the aforesaid first end 4a substantially coincides with, or moderately exceeds, the overall dimensions of the base means 5 measured along the third direction Y.

Still, the aforesaid portal means 3 has, at the first beam-shaped element 6a, a first upright part 3a with a substantially vertical extent, with which is associated the first pad means 8a that is slidable on said first linear motion guide 7a.

In particular, this first upright part 3a has, according to a view along the first direction X, a recess 3r suitable for avoiding the collision of the first upright part 3a with the first ends 4a of the crossbeam means 4t in the sliding parallel to the first direction X of the crossbeam means 4t and of the said portal means 3 with respect to the base means 5.

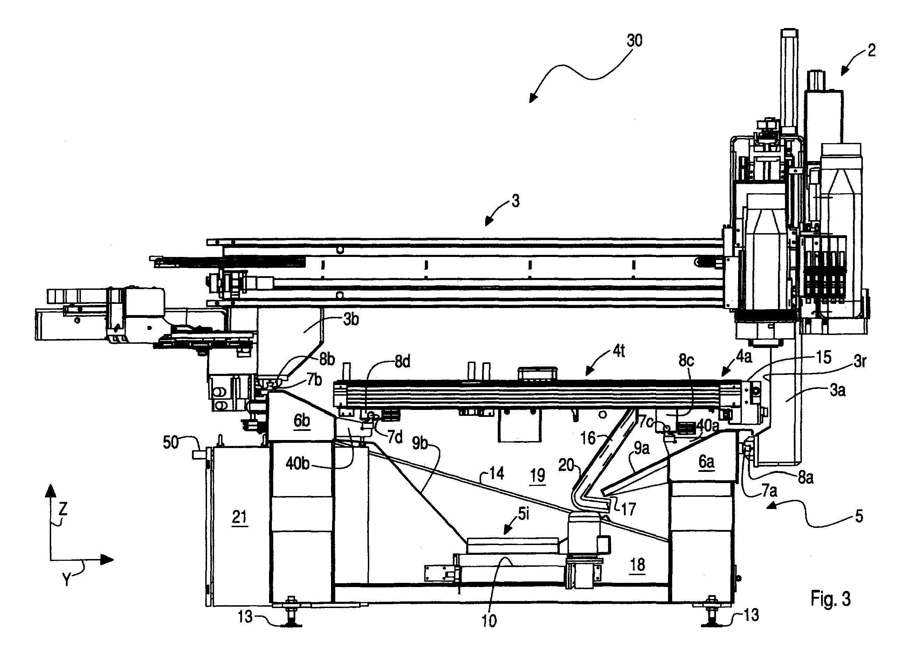

Further, the crossbeam means 4t is connected to corresponding protective sheaths 16 for electric transmission and/or pneumatic cables, shown by a dotted line in Figure 3.

The sheaths 16 traverse a horizontal slit 17 defined in the aforesaid first tilted surface 9a, or near an edge thereof, such a slit 17 being directed substantially parallel to the first direction X and configuring in the base means 5 a passage between a first space 18 located below the "V" shape and a second space 19 located above the "V" shape. Further, the sheaths 16 extend between the first space 18 and the second space 19, the portions of the sheaths 16 housed in the second space 19 being provided with respective stiff guards 20, singularly movable in association with each crossbeam means 4t.

The machine tool 30 further comprises an electrical cabinet 21 associated in a back-to-back configuration with the base means 5.

In particular, the electrical cabinet 21 is associated with a substantially border surface of the base means 5, this surface lying on a plane defined by the first direction X and by the second direction Z and being situated on the second beam-shaped element 6b side.

The aforesaid machine tool 30 further comprises a flexible mesh cable-holder chain, which is not shown, supported by supporting elements 50 and arranged for joining the electrical cabinet 21 to the portal means 3.

In particular, for a general configuration of the machine tool 30, in the cable-holder chain there are defined a first horizontal portion, that exits from the electrical cabinet 21 and runs adjacent with the second beam-shaped element 6b according to the first direction X, and a second portion that comprises a curve of the cable-holder chain and reaches the portal means 3.

The latter, in addition to the first 3a upright part, has a second 3b upright part with a substantially vertical extent, this first 3a and second 3b upright part being associated respectively with the first pad means 8a and with the second pad means 8b that are respectively slidable on the first linear motion guide 7a and on the second linear motion guide 7b.

In particular, the first 3a and the second 3b upright part are each provided respectively with a pair of the first pad means 8a and of the second pad means 8b.

In this manner, the two pads of each pair are mounted spaced apart along the first direction X by an amount that is sufficient for preventing catching and irregularities in sliding of the portal means 3 along the first direction X. It should be noted how the first beam-shaped element 6a and the second beam-shaped element 6b enable the structural stiffness of the base means 3 to be improved.

Further, it should be noted how the "V" shape of the base means enables the chips to be conveyed and collected in an effective manner towards the lower part 5i of the base means 3.

Still, it should be noted how the architecture of the machine tool 30 enables accessibility to be improved on a front side, or operating side, of the operator to the workpieces fixed on the crossbeam means 4t.

In fact, the crossbeam means 4t extends along the second axis Y, so that the aforesaid first end 4a substantially coincides with, or moderately exceeds, the overall dimensions of the base means 5, measured along the second axis Y.

Further, unlike the sheaths of known machine tools that are positioned outside the base means so as to hinder and make insecure the access of the operator on the operator side, the sheaths 16 are housed in the stiff guards 20 positioned inside the "V" shape.

This enables, on the one hand, the accessibility to the operator side of the operator to the workpieces fixed on the crossbeam means 4t to be improved and on the other hand makes access to the operator side more ordered and secure.

## Claims

1. Machine tool for processing pieces of wood or similar materials, comprising operating means (2) for machining said workpieces, portal means (3) for slidably supporting said operating means (2), a plurality of resting and retaining means (4t) for supporting said workpieces, and base means (5) extending longitudinally along a first horizontal (X) direction, suitable for supporting - slidably in said first direction (X) - both said resting and retaining means (4t), and said portal means (3), **characterised in that** said base means (5) defines - according to a normal section of said first direction (X) - substantially a "V" shape with the concavity facing upwards, suitable for collecting chips, and **in that** said base means (5) has, at a first and a second top end of said "V" shape, respectively a first (6a) and a second (6b) carrying beam-shaped element, extending in said first horizontal (X) direction, the set of said first (6a) and second (6b) beam-shaped element configuring two substantially opposite sides of the upper top portion of said base means (5).

2. Machine tool according to claim 1, **characterised in that** said "V" shape is defined - according to a normal section of said first direction (X) - by a first tilted surface (9a) and by a second tilted surface (9b) of said base means (5), said tilted surfaces (9a) and (9b) being substantially reducible to two or more flat folds, parallel to said first direction (X), converging on a lower part (5i) of said base means (5); a lower chip collecting system (10) being provided substantially in said lower part (5i).

3. Machine tool according to claim 2, **characterised in that** said lower chip collecting system (10) comprises a belt conveyor (10) for evacuating - along said first direction (X) - chips falling from said resting and retaining means (4t), or from said tilted surfaces (9a) and (9b).

4. Machine tool according to any preceding claim, **characterised in that** said first (6a) and/or said second (6b) beam-shaped element, has - according to a normal section of said first direction (X) - substantially a hollow section, possibly having slots and/or beads and/or stiffening ribs spaced along said first direction (X).

5. Machine tool according to any preceding claim, **characterised in that** with said first (6a), and respectively second (6b) beam-shaped element, there is associated a first (7a), and respectively a second (7b) linear motion guide, extending in said first direction (X), and suitable for sliding first (8a) and respectively second (8b) pad means, associated with said portal means (3), for sliding said portal means (3) with respect to said base means (5).

6. Machine tool according to any preceding claim, **characterised in that** almost one of said first (6a) and second (6b) beam-shaped elements defines - according to a section that is normal in relation to said first direction (X) - substantially a trapezium shape the smaller base of which substantially faces the centre of said "V" shape, an oblique side of said trapezium shape facing upwards to configure an upper part of said "V" shape.

7. Machine tool according to claim 5 or 6, as claim 6 is appended to claim 5, **characterised in that** with said base means (5), a third (7c), and respectively a fourth (7d) linear motion guide is associated, extending along said first direction (X), and suitable for sliding third (8c), and respectively fourth (8d) pad means associated with each of said resting and retaining means (4t), for sliding each of them with respect to said base means (5); said third (7c), and respectively fourth (7d) linear guide being arranged - in a direct plan view according to a second vertical direction (Z) - inside the strip defined by said first (7a) and second (7b) linear guide.

8. Machine tool according to claim 7, **characterised in that** said third linear guide (7c) is associated with said first beam-shaped element (6a), and/or said fourth linear guide (7d) is associated with said second beam-shaped element(6b), the association of said third linear guide (7c) with said first beam-shaped element (6a), and/or of said fourth linear guide (7d) with said second beam-shaped element(6b) being made by fixing of said guide on appendages like stiffening ribs of said first (6a) and/or respectively second (6b) beam-shaped element, exiting from said beam-shaped elements.

9. Machine tool according to any preceding claim, **characterised in that** said base means (5) has two carrying heads (11, 12), substantially end carrying heads, extending prevalently according to two respective planes that are normal in relation to said first direction (X); said carrying heads (11, 12) being made from flat and/or folded and/or welded metal sheets configuring sections with a high resistance module; on said carrying heads (11, 12) there being fixed respective substantially extreme parts of said first (6a) and second (6b) beam-shaped element; said carrying heads (11, 12) also having foot means (13) for resting said base means (5) on a floor.

10. Machine tool according to claim 9, **characterised in that** said base means (5) has - in a position comprised between the two said carrying heads (11, 12) - an intermediate stiffening carrying structure (14) extending prevalently according to a respective plane that is normal to said first direction (X); said carrying structure (14) being made from flat and/or folded and/or welded metal sheets, configuring sections with a high resistance module; on said intermediate carrying structure (14) there being fixed respective intermediate parts of said first (6a) and second (6b) beam-shaped element; said intermediate carrying structure (14) also having foot means (13) for resting, on a floor, said base means (5).

11. Machine tool according to any one of claims 7 to 10, as claim 9 is appended to claim 7, **characterised in that** said plurality of resting and retaining means comprises crossbeam means (4t), suitable for supporting suction cups or clamps for fixing said workpieces; said crossbeam means (4t) extending longitudinally along a third horizontal direction Y that is normal in relation to said first direction X and second direction Z, and being slidably engaged on said third (7c) and fourth (7d) linear guide, respectively by means of said third (8c), and fourth (8d) pad means, associated with said crossbeam means (4t); said crossbeam means (4t) being placed above in said base means (5), substantially closing said "V" shape.

12. Machine tool according to any one of claims 7 to 11, as claim 7 is appended to claim 5 and claim 9 is appended to claim 7, **characterised in that** said first linear guide (7a) is associated with said first beam-shaped element (6a) on a surface thereof that is substantially an external border for said base means (5), and substantially lying on a plane defined by said first direction (X) and second direction (Z) and **characterised in that** said second linear guide (7b) is associated with said second beam-shaped element (6b) on a surface thereof that is substantially an external border for said base means (5), and substantially lying on a plane defined by said first direction (X) and third direction (Y).

13. Machine tool according to claim 12 as appended to claim 11, **characterised in that** said crossbeam means (4t) extends along said third direction (Y), so that said first end (4a) thereof substantially coincides with - or moderately exceeds - overall dimensions of said base means (5), measured along said third direction (Y).

14. Machine tool according to claim 12 or 13, as claim 9 is appended to claim 5, where said portal means (3) has - at said first beam-shaped element (6a) - a first upright part (3a) with a substantially vertical extent, with which is associated said first pad means (8a) slidable on said first linear motion guide (7a), **characterised in that** said first upright part (3a) has, according to a view along said first direction (X), a recess (3r) suitable for avoiding the collision of said first upright part (3a) with first ends (4a) of said crossbeam means (4t), during sliding along said first direction (X) of said crossbeam means (4t) and of said portal means (3)with respect to said base means (5).

15. Machine tool according to any one of claims 11 to 14, as claim 9 is appended to claim 2 and as claim 12 is appended to claim 11, where said crossbeam means (4t) is connected to corresponding protective sheaths (16), for electric and/or pneumatic transmission cables, **characterised in that**:
- in said first tilted surface (9a), or near an edge thereof, there is defined a horizontal slit (17) directed according to said first direction (X), that in said base means (5) configures a passage between a first space (18) located below said "V" shape and a second space (19) located above said "V" shape;
- said sheaths (16) traverse said slit (17) to extend from said first space (18) with said second space (19);
- the portions of said sheaths (16) housed in said second space (19) are provided with respective stiff guards (20), singularly movable in association with each of said crossbeam means (4t).

16. Machine tool according to any one of claims 7 to 15, as claim 9 is appended to claim 7, **characterised in that** an electrical cabinet (21) is associated in a back-to-back configuration with said base means (5); in particular it is associated with a substantially border surface of said base means, lying on a plane defined by said first direction (X) and second direction (Z), located on the side of said second beam-shaped element (6b).

17. Machine tool according to claim 16, where a flexible mesh cable holder chain joins said electrical cabinet (21) and said portal means (3), **characterised in that** for a general machine configuration in said cable holder chain there are defined a first horizontal portion, that exits from said electrical cabinet (21) and runs adjacent to said second beam-shaped element (6b) according to said first direction (X), and a second portion that comprises a bend of said cable holder chain and reaches said portal means (3).

18. Machine tool according to any one of claims 14 to 17, as claim 9 is appended to claim 5, wherein said portal means (3) comprises a second (3b) upright part with a substantially vertical extent; said first (3a) and respectively second (3b) upright part being associated with said first pad means (8a) and respectively said second pad means (8b) that are respectively slidable on said first linear guide (7a) and said second linear motion guide (7b), **characterised in that** said first (3a) and respectively second (3b) upright part are each provided respectively with a pair of said pad means (8a), and of said pad means (8b), where the two pads of each of said pairs are mounted spaced apart along said first direction (X), by an amount that is sufficient for preventing catching and irregularities in the sliding of said portal means (3) along said first direction (X).
